# EUROPEAN PATENT APPLICATION

(11) **EP 4 773 036 A1**
(43) Date of publication of application: **08.07.2026**
(21) Application number: 25150171.4
(22) Date of filing: 03.01.2025
(51) Int. Cl.: G06F 40/35, G06F 16/3329, G06Q 10/0875

(54) **IMPROVED CONNECTION OF SUPPLIERS AND CUSTOMERS**

(71) Applicant: Waegeman, Tim, 2640 Mortsel (BE)
(72) Inventor: Waegeman, Tim, 2640 Mortsel (BE)
(74) Representative: Patentales BV

(57) **Abstract**

The invention provides, amongst other aspects, a method for generating a technical specification, comprising the steps of receiving, from a user, a technical requirement comprising at least two physical entities belonging to a common physical entity class; determining, based on the technical requirement, an LLM prompt comprising respective labels corresponding to each of said at least two physical entities; generating, by providing said LLM prompt to an LLM trained with respect to said physical entity class, a response relating to at least two technical means; converting said response to obtain said technical specification comprising at least two respective unique IDs for identifying the respective technical means for addressing said technical requirement.

## Description

### Field of the invention

The invention pertains to the field of human-machine interactions, particularly involving the use of machine learning and data analytics to enhance the generation of technical specifications within various industries. The invention is directed at identifying, based on a technical requirement involving physical entities, technical means for addressing said technical requirements. The invention may be generically applied in industrial applications, ranging from business-to-business interactions to consumer-business interactions.

### Background art

Large language models (LLMs) have significant potential to enhance customer-supplier interactions by providing more responsive, streamlined, and data-driven communications.

This said, generating an effective prompt for a large language model (LLM) is challenging because the quality of the prompt directly influences the relevance, accuracy, and utility of the model's response. Ambiguity and lack of precision can lead to less accurate results, as LLMs interpret text based on probabilities and context. Each prompt is interpreted in isolation, so users often need to include sufficient background information to achieve nuanced, context-aware responses. Crafting prompts that balance detail and specificity can be difficult; too much information may overwhelm the model, while too little can result in overly broad answers.

Another problem with LLMs may be that the response may be formulated in an overly generic fashion, lacking pointers toward direct and practical solutions.

Apart from these problems, there is no consensus how LLM output should be used to facilitate customer-supplier interactions.

US20230259714A1 discloses a system involving LLMs but is directed at other problems than the problems identified above. Particularly, US20230259714A1 appears to be limited to the problem of navigating from node to node within a conversation graph.

US12052206B1 also discloses a system involving LLMs but is also directed at other problems than the problems identified above. Instead, US12052206B1 appears to be directed at adequateness of AI model responses, describing a first AI model that generates short codes which may be used as input for other AI models.

The present invention aims at addressing issues, such as the issues mentioned above.

### Summary of the invention

In a first aspect, the invention provides a method for generating a technical specification, comprising the steps of
receiving, from a user, a technical requirement comprising at least two physical entities belonging to a common physical entity class;
determining, based on the technical requirement, an LLM prompt comprising respective labels corresponding to each of said at least two physical entities;
generating, by providing said LLM prompt to an LLM trained with respect to said physical entity class, a response relating to at least two technical means;
converting said response to obtain said technical specification comprising at least two respective unique IDs for identifying the respective technical means for addressing said technical requirement.

In embodiments not considered further in this document, but equally disclosed and described, the technical requirement comprises at least one physical entity, e.g., exactly one physical entity.

In embodiments not considered further in this document, but equally disclosed and described, the response comprises at least one technical means corresponding to at least one respective unique ID, e.g., exactly one technical means with corresponding unique ID.

A main advantage that may be provided by the invention is that the user is not confronted directly with the problem of generating an effective prompt, but instead provides input via the technical requirement, that comprises at least two physical entities. In embodiments, the technical requirement may thereby comprise, apart from physical entities, very "high-level" indications of the need/challenge that the user is facing, for which the technical specification is to be generated. In such embodiments, the use of LLM may advantageously allow the user to only define the need he is facing with a high level description. Also, the invention advantageously provides conversion of the response of the LLM so that unique IDs are made available to the user. This may provide the user with pointers for direct and practical implementation, rather than being confronted with the generic and unspecific language that may be present in the LLM response. In example embodiments relating to manufacturing, such pointers may relate to, e.g., a technical specification that comprises a bill of materials. In yet other examples, the technical specification may relate to any or any combination of: a high level description of the solution (formatted with unique IDs per part or per step), an in depth design plan (with unique IDs corresponding, e.g., to components), an architectural plan (with unique IDs corresponding, e.g., to architectural substructures), a series of steps to create it yourself or by using integrators (with unique ID, e.g., per integrator service or integrator task) and other service providers. Through these features, the invention may allow effective use of LLMs to facilitate customer-supplier interactions.

In embodiments, the invention provides for image-only input, with the technical requirement consisting of images, and each image being a pixel map. In embodiments, the invention provides for audio-sample-only input, with the technical requirement consisting of audio samples, and each audio sample being presented according to a PCM (pulse code modulation) representation. In embodiments, the invention provides for measurement-data-only input, with the technical requirement comprising, e.g., intervals relating to numeric values of measurements (e.g., interval of temperature, or zone or sphere of varying measured location) originating from sensors (e.g., for indicating context information), or other related measurements or intervals (or zones or spheres) derived therefrom.

Such an invention may advantageously provide a user with a user-friendly means to rely on LLMs to analyze physical entities and, in examples, the physical objects or processes to which they correspond. Thereby, the invention may provide, preferably with mediation of a database, a convenient and up-to-date technical specification corresponding to said physical entities.

When applied for manufacturing purposes, the invention may advantageously provide for, e.g., an automated generation of a bill of materials as technical specification. The technical specification may thereby relate to a list of the raw materials, sub-assemblies, intermediate assemblies, sub-components, parts, and the quantities of each needed to manufacture an object described by the physical entities, e.g. a combination of text strings and images. In such examples, the technical specification may list the elements needed to produce the object on an industrial scale, each element being provided with a unique ID. This technical output may be complemented with further information that may be convenient to the user. In the example, this may relate to, e.g., listing, for each element, of one or more parties able to produce or help supplying such an element.

When applied for inventory purposes, the invention may advantageously provide for, e.g., an automated generation of a listing of a plurality of objects present in a scene (with physical entities relating to images) and/or in a text (with physical entities relating to text strings), wherein the invention may provide swift and cost-effective identification in a fully automated manner and on an industrial scale. Thereby, the technical requirement may furthermore comprise context information, e.g., a specification of which objects should be selected for processing. This may furthermore be complemented by providing the technical requirement to a reasoning agent for analysis different from mere listing. Also in such applications, the technical output may be complemented with further information that may be convenient to the user, such as a listing, for each identified object and its associated unique ID, of one or more parties able to produce or help supplying such an object.

From its applications to (e.g.) manufacturing and/or inventory purposes, it may be understood that the invention can replace many costly operations in these fields. Traditionally, suppliers and customers have relied on methods such as market presence, referrals, trade shows, and digital marketing to discover mutual commercial opportunities. Indeed, it is well-known that these methods often result in inefficiencies, misunderstandings of product applicability, and a lack of trust due to non-technical considerations (e.g., historical overselling and underdelivering by sales representatives). The invention may provide an answer by providing a technical and automated means for interaction between customers and suppliers that overcomes these challenges. Related, the invention may allow to bridge the gap between suppliers and customers more effectively, while accurately matching capabilities with needs, and, indirectly, also contributing to building trust between the parties involved.

According to a second aspect, the invention provides a system comprising:
a reasoning agent module;
a user interface module connected to said reasoning agent module; wherein the user interface module is configured for:
receiving, from a user, a technical requirement comprising at least two physical entities belonging to a common physical entity class;
providing said technical requirement to the reasoning agent module;
receiving, from the reasoning agent module, a technical specification comprising at least two respective unique IDs for identifying respective technical means for addressing said technical requirement; wherein the reasoning agent module is configured for:
   receiving, from the user interface module, the technical requirement;
   determining, based on the technical requirement, an LLM prompt comprising respective labels corresponding to each of said at least two physical entities;
   generating, by providing said LLM prompt to an LLM trained with respect to said physical entity class, a response relating to at least two technical means;
   converting said response to obtain said technical specification.

In preferred embodiments, the system further comprises a database connected at least to said reasoning agent module; wherein preferably the reasoning agent module is configured such that the converting comprises
generating at least two respective queries, each respective query corresponding to a respective one of the technical means; and
querying, with said plurality of respective queries, at least said database to obtain said at least two respective unique IDs.

The advantages of the system may be appreciated from the advantageous combination of a reasoning agent module, provided with LLM functionality, and an adequately configured user interface module connected thereto. Particularly, the user interface frees the user from coming up with effective prompts; instead, the user provides input via the technical requirement, that comprises at least two physical entities. On the other hand, the conversion provided by the reasoning agent module ensures that unique IDs are made available to the user. This may provide the user with pointers for direct and practical implementation, rather than being confronted with the generic and unspecific language that may be present in the LLM response.

Preferred embodiments and their advantages are provided in the description and the dependent claims.

### Brief description of the drawings

The present invention will be discussed in more detail below, with reference to the attached drawings.
**Figure 1** illustrates specification generation with example methods according to the invention.
**Figure 2** shows an example system for carrying out the invention.
**Figure 3** shows an example graphical user interface 17 for providing an integrated user experience.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a system comprising A and B" should not be limited to devices consisting only of components A and B, rather with respect to the present invention, the only enumerated components of the system are A and B, and further the claim should be interpreted as including equivalents of those components.

In this document, the acronym "LLMs" refers to large language models (LLMs), i.e. artificial intelligence systems trained on vast amounts of text data to understand and generate human-like language. In embodiments, the LLMs relate to any or any combination of GPT-4 or GPT-4o (ChatGPT), BERT (Bidirectional Encoder Representations from Transformers), T5 (Text-To-Text Transfer Transformer), LLaMA (Large Language Model Meta AI) and/or Claude. While LLMs are known to the skilled person, reference is made to the original disclosures for further defining these techniques, without being limited thereto. For instance, for "BERT", reference is made to (J. Devlin, M.-W. Chang, K. Lee, K. Toutanova, BERT: Pre-training of Deep Bidirectional Transformers for Language Understanding, v2, 2019, doi:10.48550/arXiv.1810.04805), but it is also understood that BERT is not limited thereto, and may equally relate to, e.g., "SBERT" (Sentence BERT) as known to the skilled person. Also, it is understood that some LLMs provide native support for accepting a prompt comprising both media and text, whereas others may require preprocessing of the prompt for accepting such a prompt.

In this document, the term "technical requirement" is to be construed as any user input involving physical entities. The technical requirement may thereby merely list the physical entities (i.e., "consist of" the physical entities) but may also comprise qualitative or quantitative indications regarding what requirement is to be met. This may relate to specifying a need that can be defined very high-level, e.g., "cost reduction", "not enough market access", "production cost", "too much manual labor", etc. Additionally, or alternatively, the technical requirement may comprise indications that are very low-level, e.g., "height at least so that a human fits in", or "temperature range complying with (a given standard)", or even plain counts, such as "a batch of 300 of these".

In this document, the term "physical entity" is an umbrella term for any data directly or indirectly representing and/or comprising data referring to physical entities. Multiple physical entities can thereby belong to a common "physical entity class". Without being limited thereto, physical entities may relate to, e.g., any or any combination of text data and media data. Thereby, "media" is an umbrella term for any image or audio data or movie data or multimedia data or 3D data such as LiDAR data or CAD data, or any other related data. The physical entities may thus relate to any of text strings, movies, audio data of movies, video data of movies, audio data of audio recordings, text strings extracted from subtitles present in movies, text strings extracted from audio data by means of speech-to-text. The physical entities may relate, e.g., to measurement data such as time or location data or sensor data relating to, e.g., images or audio samples or video. Thereby, physical entities that are, e.g., images, may be said to belong to a common physical entity class being the image class (and, likewise, for physical entities that are audio samples or video, belonging to the audio sample class and the video class, respectively). Likewise, physical entities that are, e.g., text strings, may be said to belong to a common physical entity class being the text string class. Also, physical entities that are, e.g., a mix of images and text, may be said to belong to a common physical entity class being the image-and-text class.

The physical entities may be represented according to any quantitative or qualitative representation.

Quantitative representation of physical entities may relate, e.g., to representing a numeric value according to integer representation or floating point representation or a text string (e.g., ascii or unicode text string of figures/numbers) or a pixel map or heat map (which may be represented as image). Qualitative representation may relate to, e.g., text strings (e.g., ascii or unicode text string comprising characters and/or figures and numbers) indicating a property relating to a value (e.g., "high" or "low" or "within range" or "out of range") or a measurement or sensor status (e.g., "temperature sensor active").

Qualitative representation of physical entities may relate to, e.g., an identifier according to an ontology, possibly regardless of physical entity class. For example, the physical entities may be images showing portions of the same object being a table, wherein the object is detected to be a table, and a pre-determined ontology of the object "table", e.g. an ontology residing in one of the one or more LLMs involved, may define that the table should have a tabletop and table legs, wherein a matching is done between images of the tabletop, on the one hand, and images of the table legs, on the other hand. In another example, possibly combined therewith, an object such as a table may be defined by physical entities being text strings, such as "tabletop oak" and "table legs steel", wherein a pre-determined ontology of the object "table" may define that the table should have a tabletop comprising (or being made of) oak and table legs comprising (or being made of) steel.

In this document, the term "training" is an umbrella term for feeding an LLM with input data to "teach" it about expected properties output data to be generated. This may relate to any training process, including any self-supervised and semi-supervised training process. It may relate to training "from scratch" and training starting from an existing model. The terms "priming" and "fine-tuning" thereby refer to two types of training starting from an existing model. The term "priming" refers to providing, to an LLM, specific input or examples within a prompt to guide the model's immediate response. In contrast, the term "fine-tuning" refers to training the model on a dataset, preferably a curated dataset, to adjust its parameters for improved performance on specialized tasks over the long term. In this document, both the terms "fine-tuning" and "priming" are examples of "training". Another example of training may relate to retrieval-augmented generation (RAG), wherein the quality of a generation is improved through querying a database or the internet.

In embodiments, the training of the LLM relates to fine-tuning.

In embodiments, the training of the LLM relates to priming.

In embodiments, the training of the LLM relates to RAG.

In this document, the term "alt text generation" relates to the automated generation of a text string (e.g., one or more sentences) from media data such as images and/or audio samples and/or video and/or 3D data such as LiDAR or CAD data. When the media relates to images, the term may be interchangeable with "image-to-text processing".

The invention is not anticipated or suggested by US20230259714A1, as US20230259714A1 does not describe or suggest generating a technical specification comprising at least two respective unique IDs for identifying the respective technical means for addressing a technical requirement. Rather, US20230259714A1 appears to be limited to the problem of navigating from node to node within a conversation graph. For the same reason, the invention is not anticipated or suggested by US12052206B1, as US12052206B1 does not describe or suggest generating a technical specification comprising at least two respective unique IDs for identifying the respective technical means for addressing said technical requirement. Instead, US12052206B1 appears to be directed at adequateness of AI model responses, describing a first AI model that generates short codes which may be used as input for other AI models.

In embodiments, the method comprises the further step of providing, to the user and via a graphical user interface, a web page comprising an identification of a supplier associated with the web page along with a screen portion for allowing a user to provide said technical requirement. Thereby, preferably, the identification of the supplier is solely for informing the user which webpage they are currently visiting, and nothing more. On the other hand, the screen portion preferably solely relates to the invention (as opposed to the details of the supplier), with a graphical logo and/or a service name identifying the service relating to the present invention. In example embodiments, this relates to the screen portion of the webpage of a supplier carrying, e.g., a "trust-like" logo. Preferably, in such example embodiments, the visitor can click on the logo (i.e., the one present in the screen portion and relating to the invention) and provide its needs (i.e., provide the requirements), after which a list of components/services is generated together with corresponding suppliers (i.e., the specification). Thereby, preferably, in these example embodiments, also suppliers (potentially also competitors) different from the supplier whose webpage is visited may be proposed.

In such embodiments (i.e., embodiments involving a web page comprising an identification of a supplier associated with the web page along with a screen portion for allowing a user to provide said technical requirement), the step of receiving of said technical requirement may involve an action of the user with respect to said screen portion, wherein the step of converting said response is based at least partially on a pre-determined set of IDs of technical means suppliable by the supplier associated with the web page. This may advantageously provide an integrated user experience, wherein the user faced with a technical requirement may be helped in case of incomplete information. For instance, a user may validly find their way to web page of a relevant supplier based on the technical requirement, but may not be aware of all technical means involved. In such cases a user may be helped by the presence of the screen portion, which may, e.g., relate to a trust label and a widget. Through an action with respect to the screen portion, e.g., clicking on the screen portion, the user may provide their technical requirement while the system receiving the technical requirement may be aware of the user context. This may be enabled via a pre-determined set of IDs known to relate to technical means that are suppliable by the supplier associated with the web page. Overall, such embodiments thus allow to add to the information known through the technical requirement, also the user context as "metadata". This may contribute to better converting of the response to a technical specification. Indeed, a user interacting via the web page of a certain supplier somehow expresses a preference for said supplier, and may effectively be helped better with a technical requirement (solution) that builds on the technical means (building blocks) of that supplier, if this is possible.

In embodiments, the method comprises the further step: detecting whether the obtained technical specification comprises any technical means relating to the supplier; automatically alerting said supplier triggered dependent on a result of said detecting. For instance, the trigger may be that a technical means of the supplier has been listed in the technical specification, and the alert may be a message reporting this event, along with information regarding the technical means. Such information may relate, e.g., to automated generation of a piece of code that "prepares" a reservation or order for confirmation by the supplier. Additionally, or alternatively, when the result of said detecting is that the obtained technical specification does not comprise any technical means relating to the supplier, that may be a valid trigger for the automatically alerting of the supplier as well. Indeed, this may be useful information to the supplier, particularly since it is obtained in the context of the web page of the supplier. This may, e.g., be advantageous for the supplier to become aware of technical means that are alternatives to what they supply and/or to become aware of user expectations being different from current offering/supply. In examples, the alert and triggers for alert may be subject to custom preferences of the supplier and/or custom preferences of the user.

In embodiments, the technical requirement consists of said at least two physical entities, said respective physical entities having the common entity class being images consisting of pixels; wherein the determining of the LLM prompt involves determining respective text strings associated with the respective images and the identified technical means relate to said text strings.

In embodiments, the determining of the respective text strings relates to alt text generation for the respective images for describing a respective depicted portion of a common object depicted by the images, and the identified technical means relate to physical parts for the construction of said object.

In embodiments, the determining of the respective text strings relates to describing a set of image properties, and the identified technical means relate to unique IDs for a camera model and/or camera body model and/or lens model of at least one of the images. Such embodiments may allow, e.g., example applications wherein a user provides images shot by an unknown camera to the system, and the system returns the relevant components, e.g., the unique ID for one or more camera bodies (brand, model name), and/or the unique ID for one or more camera lenses (brand, model name), preferably along with selling points for purchase of the identified components. In variants of this example, the camera is not intended to correspond to the actual camera used, but merely relates to a camera having the capabilities illustrated by the images. This intention may be direct based on a further physical entity provided by the user (e.g. the text string "similar camera").

In embodiments, the technical requirement consists of said at least two physical entities, said respective physical entities having the common entity class being audio samples consisting of pulse code modulation, PCT, data; the determining of the LLM prompt involves determining respective text strings associated with the respective audio samples; and the identified technical means relate to said text strings.

In embodiments, the physical entities comprised in the technical requirement relate to a common object to be manufactured, wherein the technical specification relates to a bill of materials for manufacturing said object.

In embodiments, a database is queried. This may relate to any step of the method of the invention. Additionally, or alternatively, this may relate to the training of the LLM, e.g., with training of the LLM according to RAG.

In embodiments, said converting comprises
generating at least one query, each respective query corresponding to a respective one of the technical means; and
querying, with said one or more respective queries, at least one database to obtain at least one of said at least two respective unique IDs.

In embodiments, said converting comprises
generating at least two respective queries, each respective query corresponding to a respective one of the technical means; and
querying, with said plurality of respective queries, at least one database to obtain said at least two respective unique IDs.

In embodiments, for at least one query, the querying involves querying an online search engine for a search result and obtaining the respective unique ID from automated processing of the search result.

In embodiments, for each query, the querying involves querying an online search engine for a search result, whereby the respective unique ID may be determined based on the automated processing of the search result.

In embodiments, for each query, the querying involves querying an online search engine for a search result, whereby the respective unique ID may be determined based at least on the automated processing of the search result, preferably combined with the query result (if any) of a local database (if any).

In embodiments, the querying of the online search engine is done as an alternative when querying the database being a local database does not return a result.

In embodiments, the method further comprises automatically updating said database based on at least one of the technical requirements or a stored response of a user on a previously generated technical specification.

In embodiments, the method is carried out iteratively, wherein the technical specification obtained in a first iteration by means of a first LLM is used to define a technical requirement and prompt for the second iteration relying on a second LLM. In embodiments, the transition from the first iteration to the second iteration involves user interaction. In other embodiments, the transition from the first iteration to the second iteration does not involve user interaction but instead occurs automatically.

In embodiments, the first and second LLMs are different LLMs.

In embodiments, at least one of the first and second LLMs, preferably each LLM, is stateless from prompt to prompt.

In embodiments, the technical requirement received from the user comprises, apart from the at least two physical entities belonging to a common physical entity class, a further physical entity not used in the first iteration but included in the technical requirement of the second iteration. In related embodiments, the transition from the first iteration to the second iteration does not involve user interaction but instead occurs automatically.

In embodiments, the technical requirement received from the user comprises, apart from the at least two physical entities belonging to a common physical entity class, a further physical entity not belonging to said common physical entity class.

In embodiments, at least one of the unique IDs is accompanied by contact information, e.g., an e-mail address, of a third party, e.g., a supplier, and the method comprises the extra step of automatically contacting the third party through said contact information relating to a status or a supply of the technical means associated with said at least one of the unique IDs.

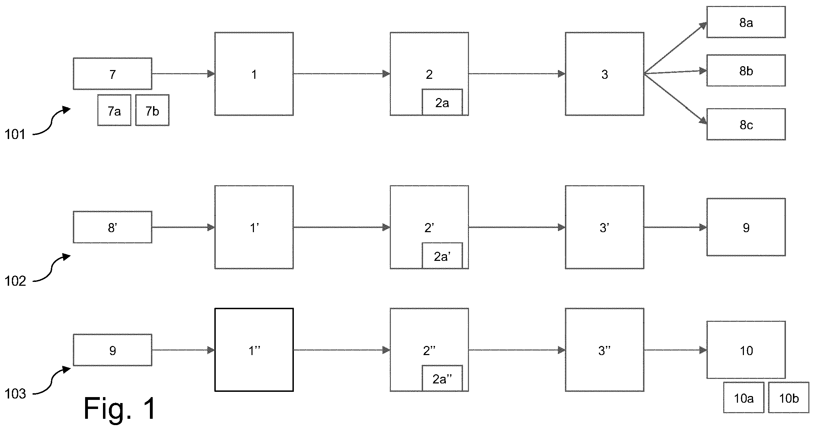

Example embodiments of the invention will be described with reference to Figs. 1-2.

### Example 1: example methods according to the invention

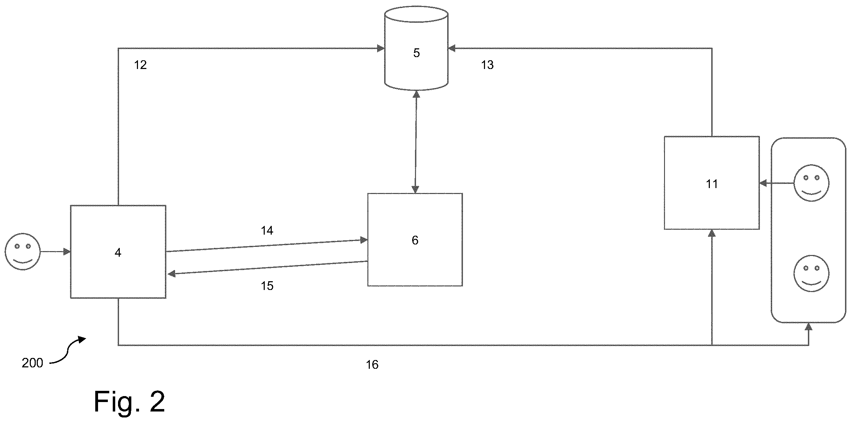

This example illustrates the method according to the invention. Figure 1 illustrates specification generation with example methods according to the invention. As this may be performed with devices according to Example 2 illustrated by Figure 2, reference numerals may refer to both Figure 1 and 2 without being limited thereby.

Both Example 1 and 2 relates to matching suppliers with customers using one or a combination of intelligent reasoning agents provided in a reasoning agent module 6. The interaction between suppliers and customers is facilitated by integrating high level user-defined requirements/challenges, a supplier + capability (including offering of products/services) database 5, and a trust-based feedback system.

The system components involved in this example are the following:
- Reasoning Agent: Incorporates machine learning algorithms to analyze user needs/requirements, help in the ideation of new solutions, details the design of these solutions and generates compatible supplier suggestions.
- Supplier Database: A comprehensive repository of supplier information, including capabilities, active sectors, products and services offered, historical performance, and customer ratings.
- User Interface: Enables users to input their needs/challenges in a user friendly and trustful way, reviewing solutions co-invented with the system and review suggested suppliers, automatically send out inquiries, and rate interactions, thereby continuously enhancing the database.

The operational methodology involved in this example is the following:
- Input Acquisition: the system collects input from a company specifying high level or detailed needs or challenges via an interactive interface. The requested data can be very limited, f.i., sector, company size, product/service offering, challenge that needs to be handled and the customers development capabilities (if any).
- Requirement Analysis: The reasoning agent processes the input to define precise requirements and potential solutions. These solutions are presented to the user, after which a detailed designplan can be generated, including a bill of material and services.
- Supplier Matching: reasoning agent queries the supplier database to find suitable suppliers based on the analyzed requirements, supplier filters and prior customer feedback (if any).
- Alternative Supplier Suggestions: Should there be no direct match within the database, the system employs an automatically generated and engineered web search to identify and suggest alternative suppliers, thereby ensuring that the user's needs are always met. The results are also post-processed. When a supplier is found, their website is also explored to extract the desired information.
- Output Presentation: The system presents a curated and ordered list of suppliers, along with relevant data such as ratings and capability matching, to the user.
- Feedback Integration: User feedback, filters and ratings are integrated into the system to refine future suggestions and update supplier rankings.

The modes of operation from suppliers perspective involved in this example are the following:
- Inbound Mode: Where companies seek solutions for their challenges, the system acts as an inventor system, supporting the user where possible by proposing solutions and potential suppliers based on the company's limited input requirements.
- Outbound Mode: Suppliers use the system to generate better qualified leads by showcasing the use of the system (via platforms / social networks, websites) to understand the needs and requirements first before proposing the supplier's capabilities matched against the presented needs, ... In this way the potential customers are always helped, or by indeed the supplier's offerings or, when there is no match, by other potential suppliers. The integration of the system within their marketing creates smart, adaptive and intractable marketing content with the intent to really help the customer.

The trust and verification mechanism involved in this example is the following.
- Each interaction through the system is designed to enhance trust by ensuring that all suggested matches are based on verified capabilities and genuine customer reviews, thus minimizing the risk of inaccurate representations. Furthermore, the objective of the system is to objectively help every party; the potential customer in solving their challenges and meeting their needs, while on the other end, helping suppliers to find better qualified leads and get a better understanding of the actual needs in sectors.

Potential advantages of this example are the following:
- Efficiency: Significantly reduces the time and effort required for companies to find suitable suppliers and vice versa.
- Trust: Builds and maintains trust through an objective and independent system that helps where possible, with transparent ratings and clear, context-driven communications.
- Accuracy: Enhances the accuracy of matches between company needs and supplier capabilities through continuous learning and feedback integration.

Potential commercial applications of this example are the following:
- The system can be applied across multiple sectors where supplier-customer dynamics are crucial, including manufacturing, IT services, healthcare, and consumer goods, among others.

A summary of key features of this example may be the following:
- A method is provided for matching suppliers with customers using one or a combination of intelligent reasoning agents, characterized by the integration of high level user-defined requirements/challenges, a supplier + capability (incl offering of products/services) database, and a trust-based feedback system.
- A key feature is that the reasoning agent is adapted to perform real-time updates based on incoming data and feedback.
- Another key feature is that the agent provides alternative supplier suggestions (query search and in depth analysis of info on web page of supplier to determine quality of match) when initial matches are not found in the existing database.
- Overall, a comprehensive solution is set forth to modernize and streamline the process of establishing supplier-customer relationships, grounding the approach in principles of mutual benefit, trust, and technological advancement.

Figure 1 presents a schematic flow of interactions between various large language models (LLMs) used to support technical specification generation. It includes three primary LLMs, each serving a distinct purpose within the workflow. In variants of this example, only the first workflow 101 is carried out. In other variants, the workflows 101, 102 and 103 are used in cascade (see below).

### Example with workflow 101 only

Workflow 101 illustrates a method for generating a technical specification 8a, 8b, 8c. The method comprises several steps.

The first step is the receiving 7, from a user, of a technical requirement comprising at least two physical entities 7a, 7b belonging to a common physical entity class.

The next step is the determining 1, based on the technical requirement, of an LLM prompt comprising respective labels corresponding to each of said at least two physical entities. Thereby, the technical requirement may comprise the physical entities but may also comprise indirect references to said physical entities. Additionally, the technical requirement may comprise further indications, both technical or non-technical, regarding the desired solution sought.

The following step is the generating 2, by providing said LLM prompt to an LLM 2a trained with respect to said physical entity class, of a response relating to two technical means.

In a subsequent step, said response is converted 3 for obtaining said technical specification, in this case comprising three proposal solutions 8a, 8b, 8c. Each of the proposal solutions comprises two respective unique IDs for identifying the respective technical means for addressing said technical requirement. In variants of this example, the different proposal solutions have different numbers of technical means, and also the number of unique IDs differs across proposal solutions.

Not shown in Figure 1, but shown in Figure 2, is that a database 5 is available for the conversion 3. In this example, the conversion comprises generating two respective queries, one for each of both technical means. In this example, a unique ID is found in the database and is returned for the first technical means, and the unique ID is returned, along with supplier information for supplying this technical means. However, for the second technical means, the query within the database does not return any result from the database 5. Triggered by this absence, the reasoning agent module 6 performs an external search via a search engine online (e.g., Google) and, based on filtering (e.g., rule-based filtering), selects a search result and inserts an associated unique ID (e.g., a brand name and model name), along with supplier information for supplying this technical means. For the second query, the querying thus involves querying an online search engine for a search result and obtaining the respective unique ID from automated processing of the search result, whereby the querying of the online search engine is done as an alternative when querying the database being a local database does not return a result.

After obtaining the search result from the online search, the database 5 is updated automatically by the reasoning agent module. In variants of this example, the database 5 is also updated based on the technical requirement of a user.

### Variant example with workflows 101, 102 and 103 in cascade

Workflows 101, 102 and 103 together illustrate a method for generating a technical specification 10. It comprises going through workflow 101, where the technical specification with three proposals 8a, 8b and 8c is merely a first iteration. Particularly, in this variant example, the method is carried out iteratively, with a cascade of the first, second and third LLM 2a, 2b and 2c.

The technical specification 8a, 8b, 8c obtained in a first iteration by means of a first LLM 2a is used for defining a technical requirement and prompt for the second iteration relying on a second LLM. Thereby, user interaction is provided via the user interface module 4. Particularly, the three proposals 8a, 8b and 8c are displayed to the user and the user is allowed to select one of the three proposals, which is then automatically fed to the second workflow 102.

In the second workflow 102, the selected proposal serves as new technical requirement 8' comprising at least two physical entities belonging to a common physical entity class. The first step is determining 1', based on the technical requirement 8', of an LLM prompt. The next step is generating 2', by providing said LLM prompt to a second LLM 2a', a response relating to at least two technical means. In this example, the second LLM 2a' is different from the first LLM, in variants of this example they are the same. The next step is converting 3' said response for obtaining the technical specification 9. In this example, this technical specification 9 is presented to the user and, after confirmation, is fed to the third workflow 103, with this technical specification 9 as new technical requirement. The next step is again the determining 1", based on the technical requirement 9, of an LLM prompt. Thereby, technical requirement 9 may relate to a more detailed (or lower-level) solution than what is provided by technical requirement 8'. The following step is generating 2", by providing said LLM prompt to a third LLM 2a", a response relating to at least two technical means. In this example, the third LLM 2a" is different from the first and second LLM, in variants of this example they are all the same. The next step is converting 3" said response for obtaining the technical specification 10 comprising at least two respective unique IDs 10a, 10b for identifying the respective technical means for addressing said technical requirement.

In variants of the above example, no unique IDs are determined for the technical specifications 8a, 8b, 8c and 9, since they are not presented to the user, and unique IDs are determined only for the last technical specification 10, as this is the one presented as final to the user.

In variants of this example, the first, second and third LLM are all stateless from prompt to prompt.

In other variants of this example, the technical requirement received 7 from the user comprises, apart from the at least two physical entities 7a, 7b belonging to a common physical entity class, a further physical entity not used in the first iteration but included in the technical requirement of the second iteration, wherein the transition from the first iteration to the second iteration does involve user interaction but instead occurs automatically.

With regard to the roles of the different LLMs in this example, following roles may be attributed. The first LLM 2a may be responsible for "inventing solutions" in response to the technical requirement set by the user. The response of the first LLM may be converted into three possible solutions 8a, 8b and 8c. The second LLM 2b may provide a more in-depth description of how a selected one of the proposed solutions might work in practice. The response of the second LLM may be converted into a detailed solution 9. The third LLM 3b may focus on identifying and retrieving all necessary components and services required to implement the solutions. The response of the third LLM may be converted into a list of needed components and services.

### Example 2: example devices according to the invention

This example illustrates the system according to the invention. Figure 2 shows an example system for carrying out the invention. As the system may be used to carry out methods according to Example 1 illustrated by Figure 1, reference numerals may refer to both Figure 1 and 2 without being limited thereby.

Figure 2 illustrates a system 200 comprising a reasoning agent module 6, as well as a user interface module 4 connected to said reasoning agent module 4. Furthermore, a database 5 is shown comprising information pairing supplier information with capability information (including offering of products/services). Furthermore, also a supplier interface module 11 is provided.

The user interface module 4 is configured for receiving 7, from a user, a technical requirement 7 comprising at least two physical entities 7a, 7b belonging to a common physical entity class; providing 14 said technical requirement 7 to the reasoning agent module 6; receiving 15, from the reasoning agent module 6, a technical specification 8a, 8b, 8c; 10 comprising at least two respective unique IDs 10a, 10b for identifying respective technical means for addressing said technical requirement.

The reasoning agent module 6 is configured for receiving 14, from the user interface module 4, the technical requirement 7; determining 1, based on the technical requirement, an LLM prompt comprising respective labels corresponding to each of said at least two physical entities; generating 2, by providing said LLM prompt to an LLM 2a, 2a', 2a" trained with respect to said physical entity class, a response relating to at least two technical means; converting 3 said response for obtaining said technical specification 8a, 8b, 8c; 10. Thereby, the number of LLMs (being three) is arbitrary; in variants of this example the number is less than three or more than three or equals one or two or four or five or six or seven or eight or nine or ten (etc).

The database 5 is connected to each of the said reasoning agent module 6, the user interface module 4 and the supplier interface module 11. The reasoning agent module 6 is configured such that the converting comprises generating at least two respective queries, each respective query corresponding to a respective one of the technical means; and querying, with said plurality of respective queries, said database 5, for obtaining said at least two respective unique IDs 10a, 10b.

Several information flows 12-16 may be identified between the modules and the database. Data collected via the user interface, such as the technical requirement or further selections/input from the user, may flow 12 to the database for being stored. This may, e.g., relate to information regarding sector, size (FTEs), offering, challenge, extra information, location. Concurrently, data flows 14 to the reasoning agent module 6, to allow the latter to invent solutions in response to a technical requirement from the user.

Data generated or mediated by the reasoning agent module 6 flows 4 back to the user interface, relating to the generated technical specifications but also to possible selections to be presented to the user, and/or information regarding subsequent iterations and/or search results for queries. Concurrently, data is exchanged with the database for queries as well as storage.

Data generated or mediated by the user interface module may flow 16 toward the supplier interface module 11. This may relate, e.g., to technical specifications for which, for at least one of the unique IDs, the ID is accompanied by contact information, e.g., an e-mail address, of a supplier. The method may thereby provide for the extra step of automatically contacting the third party through said contact information, either through the user interaction module 4 (as shown) or directly from reasoning agent module 6 (not shown). This may relate to any automated enquiry for the suppliers, e.g., a status or a supply of the technical means associated with said at least one of the unique IDs. In variants of the example, the contacting may take place on condition of prior approval from the user via the user interface.

Via the supplier interaction module 11, suppliers may input data to the database, according to data flow 13. This may relate to their name, website, products, services, prices, active sectors, etc.

### Example 3: example applications according to the invention

This example illustrates applications of the invention. It may be combined with the example methods of Example 1 and the example devices of Example 2. Like Example 1 and 2, this example relates to matching suppliers with customers using one or a combination of intelligent reasoning agents provided in a reasoning agent module. Also here, the interaction between suppliers and customers is facilitated by integrating high level user-defined requirements/challenges, a supplier + capability (including offering of products/services) database, and a trust-based feedback system.

In a first variant of this example, the technical requirement relates to a customer-defined requirement, with the customer being the user. Particularly, the user has a custom-made object being a table and wants to get in touch with suppliers with the aim of producing these tables on an industrial scale.

To this end, the user feeds the system, via its user interface, with several images of the table (overview image, close-up of tabletop, close-up of leg, etc), along with several text string inputs describing the table ("tabletop oak", "table leg steel", etc). Thereby, in this example, the images contain an element allowing to accurately estimate the size of the table, such as a 1 EUR coin present on the tabletop. These inputs (i.e., several physical entities of the common image class and several physical entities of the common text string class) are fed to the example system of Example 2 and processed.

The processing entails the determining, based on the inputs, of a prompt. In this example, the LLM is configured to receive text-only prompts, and the prompt is a text-only-prompt. To process the images, alt text generation is applied to the images to extract useful information such as the presence and dimensions of tabletop and table legs and number of table legs which can be entered with respective labels into the prompt. Preferably the alt text generation is done in an integrated fashion, wherein it is detected that the images depict respective portions of a common object being the table. To process the text strings provided by the user, a synonym check is performed and respective labels are added, preferably thereby taking into account the information extracted from the images. The result is a prompt that combines the information of the images and the text strings. The combination may be done by (independent) concatenation of parts of the prompt, but may also be done in an integrated manner (with dependency between part of the prompt taken into account), and yields a prompt that is to be fed to the LLM. In variants of this example (not further considered here), the LLM is configured to receive a mix of images and text, or images only, and the prompt is determined accordingly. In yet other variants, the prompt is augmented with further indications provided by the user regarding the desired result.

The LLM of this example is trained with respect to the physical entity class, being, in this example, a class of text string input relating to table-like objects. This may relate, e.g., to a RAG set-up. Based on the prompt, the LLM is able to translate the technical requirement (i.e., the table as defined by its visual appearance and several text strings) into a response that lists technical means for manufacturing the table. The technical means include the separate table parts (tabletop, table legs, possibly apron) as well as provisions for mutually attaching the parts (e.g., openings provided at one end of each table leg for allowing releasable attachment to the tabletop and/or the apron, etc). The response may include/propose several proposals for the provisions (e.g., several means of attachment) as well as different types of tabletops (e.g., single-part tabletops or tabletops made of multiple releasable parts).

In a next step, the response of the LLM is converted to the technical specification, wherein alternatives may be "pruned" or combined to arrive at a single proposal with all parts defined in their combination, or alternatively several proposals each with all parts defined in their combination. The technical specification comprises this proposal (or alternatively, these several proposals) in the form of a bill of materials. The system delivers this technical specification to the user via the user interface module.

The bill of materials includes unique IDs for the tabletop and the different table legs to distinguish between them and allow unambiguous listing of parts. Thereby, in this example, the material for each of the elements is indicated, as well as estimated dimensions of each of the parts. The estimated dimension may e.g. relate to a maximum dimension for each, as this is a main parameter for shipping logistics, either as separate (table) parts or as mounted single object (i.e., a table). Along with each part, a listing of possible suppliers for the concerned part is indicated, wherein parts of the same type (e.g., the legs) may be allocated to a same list of possible suppliers. This conveniently allows the user, based on minimal input from their end, to quickly arrive at a direct and practical implementation of the technical requirement defined by the images and text strings of the table at hand.

### Example 4: example integrated user experience according to the invention

This example 300 describes example embodiments wherein the technical requirement is received from the user via a widget or trust label present on the web page of the supplier.

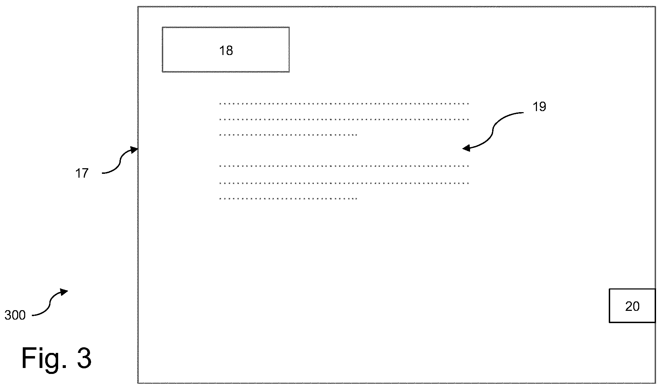

Figure 3 shows an example graphical user interface 17 for providing an integrated user experience. It relates to the web page of a supplier, with an identification 18 indicating the logo and name of the supplier shown on the web page, along with web page contents 19 that is entirely managed by the supplier. The web page is configured to "host" the invention via a widget, in screen portion 20.

The screen portion 20 allows the user to provide the technical requirement. In this example, the screen portion shows a trust label, and interaction with the screen portion is enabled through widget functionality. In other words, the screen portion comprises a widget. Particularly, the user clicks on the trust label and a widget is shown that is adapted to receive 7 the technical requirement. By doing so, the user of this example provides their technical requirement in a "context-enriched" way. Indeed, the user was on this web page because they expected relevance of this supplier for the technical requirement at hand. This context information is put to good use, as the converting 3 of the response is based on a pre-determined set of IDs of technical means that have been indicated by the supplier as suppliable.

This example thus illustrates an integrated user experience, wherein the user faced with a technical requirement already knows that a given supplier may be relevant (but not more), and is helped to find further information. The user of this example found their way to the web page of the supplier but is not aware of all technical means involved. The technical requirement is received and if possible, the response generated by the LLM is matches with a pre-determined set of IDs known to relate to technical means suppliable by the supplier associated with the web page. This way, the preference of the user (who is interacting via the web page of a certain supplier) may effectively be used to obtain a tailored technical requirement (solution) that builds on the technical means (building blocks) of that supplier, if possible.

**Such** a match may not always be possible. From a user perspective, in such cases, it may be beneficial to be helped in a direct way, receiving directions towards alternative suppliers whenever the given supplier (the one whose webpage is visited) is unable to provide the sought components and/or services. In this example, it is detected whether the obtained technical specification 8a, 8b, 8c; 10 comprises any technical means relating to the supplier, and the supplier is automatically alerted via e-mail and/or via a push notification or other notification on an app, based on the account information of the supplier. The alert is triggered dependent on a result of said detecting. In this example, in case technical means of the supplier are detected, an automated reservation or order is prepared for confirmation and provided to the supplier in a fully automated fashion. In this example, additionally, when the result of said detecting is that the obtained technical specification 8a, 8b, 8c; 10 does not comprise any technical means relating to the supplier is also a valid trigger for the automatically alerting of the supplier. This may be advantageous for the supplier to become aware of technical means that are alternatives to what they supply and/or to become aware of user expectations being different from current offering/supply. From a user perspective, as mentioned, it may be beneficial to be helped in a direct way, receiving directions towards alternative suppliers whenever the given supplier (the one whose webpage is visited) is unable to provide the sought components and/or services. In examples, the alert and triggers for alert may be subject to custom preferences of the supplier and/or custom preferences of the user.

(End of example 4)

## Claims

1. A method for generating a technical specification (8a, 8b, 8c; 10), comprising the steps of
receiving (7), from a user, a technical requirement comprising at least two physical entities (7a, 7b) belonging to a common physical entity class;
determining (1), based on the technical requirement, an LLM prompt comprising respective labels corresponding to each of said at least two physical entities;
generating (2), by providing said LLM prompt to an LLM (2a, 2a', 2a") trained with respect to said physical entity class, a response relating to at least two technical means;
converting (3) said response for obtaining said technical specification (8a, 8b, 8c; 10) comprising at least two respective unique IDs (10a, 10b) for identifying the respective technical means for addressing said technical requirement.

2. Method of claim 1, comprising the further step:
providing, to the user and via a graphical user interface (17), a web page comprising an identification (18) of a supplier associated with the web page along with a screen portion (20) for allowing a user to provide said technical requirement;
wherein said step of receiving (7) of said technical requirement involves an action of the user with respect to said screen portion (20); and
wherein said step of converting (3) said response is based at least partially on a pre-determined set of IDs of technical means suppliable by the supplier associated with the web page.

3. Method of claim 2,
wherein the method comprises the further step:
detecting whether the obtained technical specification (8a, 8b, 8c; 10) comprises any technical means relating to the supplier;
automatically alerting said supplier triggered dependent on a result of said detecting.

4. Method of claim 3,
wherein the result of said detecting is that the obtained technical specification (8a, 8b, 8c; 10) does not comprise any technical means relating to the supplier despite said response being based at least partially on the set of IDs of technical means suppliable by the supplier; and
wherein said result that the obtained technical specification (8a, 8b, 8c; 10) does not comprise any technical means relating to the supplier is a valid trigger for said automatically alerting of said supplier.

5. Method of claims 1-4, wherein the technical requirement (7) consists of said at least two physical entities, said respective physical entities having the common entity class being images consisting of pixels; wherein the determining (1) of the LLM prompt involves determining respective text strings associated with the respective images; and wherein the identified technical means relate to said text strings.

6. Method of claim 5, wherein
**either**
the determining of the respective text strings relates to alt text generation for the respective images for describing a respective depicted portion of a common object depicted by the images, wherein the identified technical means relate to physical parts for the construction of said object;
**or**
the determining of the respective text strings relates to describing a set of image properties, wherein the identified technical means relate to unique IDs for a camera model and/or camera body model and/or lens model of at least one of the images.

7. Method of claims 1-5, wherein the technical requirement (7) consists of said at least two physical entities, said respective physical entities having the common entity class being audio samples consisting of pulse code modulation, PCT, data; wherein the determining (1) of the LLM prompt involves determining respective text strings associated with the respective audio samples; and wherein the identified technical means relate to said text strings.

8. Method of claims 1-7, wherein the physical entities comprised in the technical requirement relate to a common object to be manufactured, and wherein the technical specification relates to a bill of materials for manufacturing said object.

9. Method of claims 1-8, wherein said converting comprises
generating at least two respective queries, each respective query corresponding to a respective one of the technical means; and
querying, with said plurality of respective queries, at least one database (5), for obtaining said at least two respective unique IDs (10a, 10b).

10. Method of claim 9, wherein for at least one query, the querying involves querying an online search engine for a search result and obtaining the respective unique ID from automated processing of the search result, **preferably** wherein the querying of the online search engine is done as an alternative when querying the database being a local database does not return a result.

11. Method of claims 9 or 10, further comprising
automatically updating said database based on at least one of the technical requirement or a stored response of a user on a previously generated technical specification.

12. Method of claims 1-10, wherein the method is carried out iteratively, wherein the technical specification (8a, 8b, 8c; 10) obtained in a first iteration by means of a first LLM is used for defining a technical requirement and prompt for the second iteration relying on a second LLM;
wherein **preferably** the first and second LLM are different LLMs; and
wherein **preferably** at least one of the first and second LLM, preferably each LLM, are stateless from prompt to prompt.

13. Method of claims 10-12, wherein the technical requirement received (7) from the user comprises, apart from the at least two physical entities (7a, 7b) belonging to a common physical entity class, a further physical entity not used in the first iteration but included in the technical requirement of the second iteration.

14. Method of claims 1-13, wherein the technical requirement received (7) from the user comprises, apart from the at least two physical entities (7a, 7b) belonging to a common physical entity class, a further physical entity not belonging to said common physical entity class.

15. A system (200) comprising:
a reasoning agent module (6);
a user interface module (4) connected to said reasoning agent module (4);
wherein the user interface module (4) is configured for:
receiving (7), from a user, a technical requirement (7) comprising at least two physical entities (7a, 7b) belonging to a common physical entity class;
providing (14) said technical requirement (7) to the reasoning agent module (6);
receiving (15), from the reasoning agent module (6), a technical specification (8a, 8b, 8c; 10) comprising at least two respective unique IDs (10a, 10b) for identifying respective technical means for addressing said technical requirement;
wherein the reasoning agent module (6) is configured for:
receiving (14), from the user interface module (4), the technical requirement (7);
determining (1), based on the technical requirement, an LLM prompt comprising respective labels corresponding to each of said at least two physical entities;
generating (2), by providing said LLM prompt to an LLM (2a, 2a', 2a") trained with respect to said physical entity class, a response relating to at least two technical means;
converting (3) said response for obtaining said technical specification (8a, 8b, 8c; 10);
wherein **preferably**
the system further comprises a database (5) connected at least to said reasoning agent module (6); and wherein **preferably** the reasoning agent module (6) is configured such that the converting comprises
generating at least two respective queries, each respective query corresponding to a respective one of the technical means; and
querying, with said plurality of respective queries, at least said database (5), for obtaining said at least two respective unique IDs (10a, 10b).
